# EUROPEAN PATENT APPLICATION

(11) **EP 4 714 839 A1**
(43) Date of publication of application: **25.03.2026**
(21) Application number: 25196977.0
(22) Date of filing: 20.08.2025
(51) Int. Cl.: B65B 9/20, B65B 51/22, B29C 65/36, H05B 6/02, B29C 65/00

(54) **AN INDUCTOR DEVICE AND A CONNECTOR DEVICE FOR INDUCTIVELY HEATING A WEB OF PACKAGING MATERIAL, A SEALING UNIT AND A PACKAGING MACHINE FOR PRODUCING SEALED PACKAGES FROM A WEB OF PACKAGING MATERIAL**

(30) Priority: 24.09.2024 IT 202400021264
(71) Applicant: Tetra Laval Holdings & Finance S.A., 1009 Pully (CH)
(72) Inventor: ISRAELSSON, Karl, 22186 Lund (SE); BABINI, Andrea, 41123 Modena (IT); CASINI, Giulio, 41123 MODENA (IT); STAJKOVIC, Marko, 22186 Lund (SE); ANDERSSON, Håkan Göte, 22186 Lund (SE); CHRISTOFFERSSON, Jonas, 22186 Lund (SE)
(74) Representative: Tetra Pak Patent Attorneys

(57) **Abstract**

There is described an inductor device (21) for inducing a current in a web (3) of packaging material with an electrically conductive layer having a number of coils (23) configured to induce a current in the electrically conductive layer, a first electrical coupling element (25) for receiving electrical power from a connector device (22), and a first mechanical coupling element (26) which is mechanically connectable to the connector device (22) and is structurally distinct from the first electrical coupling element (25). There is also described a connector device (22) configured for inductively inducing a current in the web (3) of packaging material having a second electrical coupling element (34) configured for transmitting electrical power to the inductor device (21) and a second mechanical coupling element (35) configured for mechanically connecting with the inductor device (21) and structurally distinct from the second electrical coupling element (34).

## Description

### TECHNICAL FIELD

The present invention relates to an inductor device for inductively inducing a current in a web of packaging material, to a connector device for connecting to the inductor device, to a sealing unit provided with said inductor device and said connector device and a packaging machine for producing sealed packages from a web of packaging material.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material and is in turn covered with another layer of heat-seal plastic material forming the inner face of the package eventually contacting the food product.

Just by way of example, packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

For completing the forming operations, the tube is filled with a pourable product, in particular a pourable food product, and is transversally sealed and subsequently cut along equally spaced transversal cross sections within a package forming apparatus of the packaging machine during advancement along the vertical advancing direction.

Pillow packages are so obtained, each pillow package has a longitudinal sealing band, a top transversal sealing band and a bottom transversal sealing band.

A typical packaging machine comprises a conveying device for advancing the web of packaging material, the sterilization apparatus for sterilizing the web of packaging material prior to its formation into the tube, a tube forming and sealing device configured to form the tube from the advancing web of packaging material and to longitudinally seal the tube and a filling device for filling the tube with the pourable product.

Finally, the packaging machine comprises the package forming apparatus realized to form and transversally seal the tube of packaging material. More in detail the package forming apparatus comprises a sealing unit configured for inductively sealing the tube of packaging material along the equally spaced transversal cross sections. Additionally, the package forming apparatus comprises at least one cutting element configured to transversally cut the tube after sealing of the tube.

Even though the known sealing units work satisfactorily well, a desire is felt in the sector to further improve and simplify the known sealing units. For example, a need is felt to provide inductor devices and connectors being even more robust and resistant, considering the harsh environment in which they operate.

### DISCLOSURE OF INVENTION

It is therefore an object of the present invention to provide an inductor device for inducing a current in a web of packaging material comprising a conductive layer addressing the drawbacks of the prior art and, in particular, being more robust.

An object of the present invention is to provide a connector device for coupling to the inductor device and providing power thereto addressing the drawbacks of the prior art and, in particular, being more robust.

An object of the present invention is to provide a sealing unit with an inductor device and a connector device addressing the drawbacks of the prior art and, in particular, being more robust.

An object of the present invention is to provide a packaging machine for producing sealed packages from a web of packaging material addressing the drawbacks of the prior art and, in particular, being more robust.

According to the invention there are provided an inductor device for inducing a current in a web of packaging material and a connector for coupling to the inductor device, to a sealing unit provided with said inductor device and said connector device and a packaging machine for producing sealed packages from a web of packaging material according to the appended claims.

### BRIEF DESCRIPTION OF THE DRAWINGS

A non-limiting embodiment of the present invention will be described by way of example with reference to the accompanying drawings, in which:
- figure 1 is a schematic view of a packaging machine having a sealing unit according to the present invention, with parts removed for clarity;
- figure 2 is a schematic perspective view of the sealing unit of figure 1 with parts removed for clarity;
- figure 3 is a perspective view of a particular of the sealing unit of figure 2;
- figures 4 and 5 are perspective views of the particular of figure 3 with parts removed for clarity;
- figure 6 is a perspective view of an inductor device of the sealing unit of figure 2; and

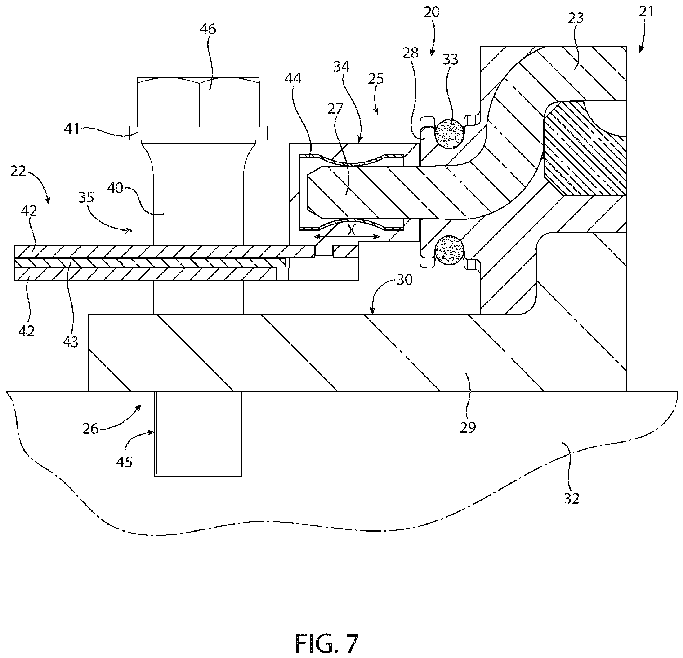

- figure 7 is a sectional view of the particular of figure 3 with parts removed for clarity.

### BEST MODES FOR CARRYING OUT THE INVENTION

Number 1 indicates as a whole a packaging machine for producing sealed packages 2 of a pourable product, in particular a pourable food product, such as milk, milk drinks, yoghurt, yoghurt drinks, fruit juice, wine, tomato sauce, emulsions, beverages containing pulp, salt, sugar, etc.

In more detail, packaging machine 1 is configured to produce packages 2 from a multilayer packaging material. Preferentially, the multilayer packaging material has heat seal properties (i.e. portions of the multilayer packaging material can be sealed to one another). The multilayer packaging material comprises at least an electrically conductive layer. In further detail, the multilayer packaging material may comprise at least one layer of fibrous material, such as e.g. paper or cardboard, and at least two layers of heat-seal plastic material, e.g. polyethylene, interposing the layer of fibrous material in between one another. Preferentially, one of these two layers of heat-seal plastic material may define the inner face of packages 2 contacting the pourable product. Moreover, the multilayer packaging material may also comprise a layer of gas- and light-barrier material, e.g. aluminum foil or ethylene vinyl alcohol (EVOH) film, preferentially being arranged between one of the layers of the heat-seal plastic material and the layer of fibrous material. Preferentially, the packaging material may also comprise a further layer of heat-seal plastic material being interposed between the layer of gas- and light-barrier material and the layer of fibrous material.

In further detail, the multilayer packaging material may be provided in the form of a web 3.

Furthermore, packaging machine 1 is configured to produce packages 2 by forming a tube 4 from the web 3, longitudinally sealing the tube 4, filling the tube 4 with the pourable product and to transversally seal, and preferentially transversally cut the tube 4.

According to some possible non-limiting embodiments, each package 2 extends along a longitudinal axis A and comprises at least a first transversal sealing band 5, and preferentially also a second transversal sealing band arranged at opposite ends of the package 2.

Moreover, each package 2 also comprises a longitudinal seam portion 6. Preferentially, each first transversal sealing band 5 and/or each second transversal sealing band are transversal (preferentially perpendicular) to the respective longitudinal seam portion 6.

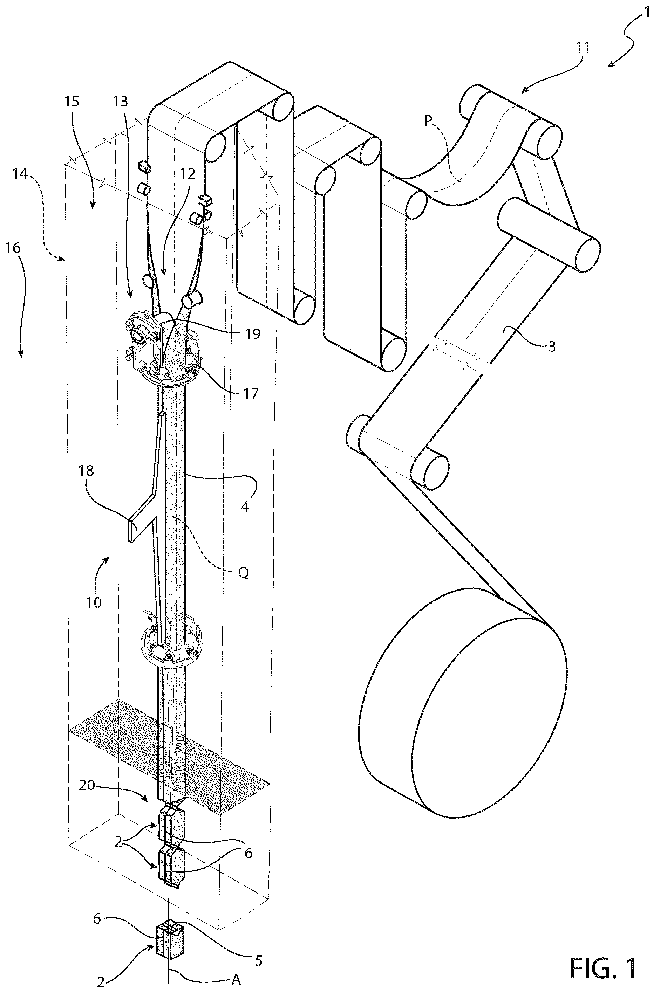

With particular reference to figure 1, packaging machine 1 comprises a package forming apparatus 10 configured to at least partially form the tube 4, preferentially to also transversally seal and/or to transversally cut the tube 4, for obtaining the packages 2.

Moreover, packaging machine 1 comprises:
- a conveying device 11 configured to advance the web 3 along a web conveying path P, preferentially to a tube forming station, at which, in use, the web 3 is formed into the tube 4, and configured to advance the tube 4 along a tube conveying path Q;
- a tube forming and sealing device 12 configured to form the tube 4 from the advancing web 3 and to longitudinally seal the tube 4; and
- a filling device 13 for filling the tube 4 with the pourable product.

In further detail, the packaging machine 1 comprises an isolation chamber 14, preferentially delimiting an inner environment 15 from an outer environment 16. Preferentially, inner environment 15 is a sterile (aseptic) environment, preferably containing a controlled atmosphere. Preferentially, the tube forming and sealing device 12 is at least partially arranged within the isolation chamber 14, in particular within the inner environment 15, and is configured to fold and longitudinally seal the tube 4 within the isolation chamber 14, in particular within the inner environment 15.

Moreover, the packaging machine 1 comprises a sterilization unit (not shown) configured to sterilize the advancing web 3, preferentially the sterilization unit is arranged upstream of the tube forming and sealing device 12 along the web conveying path P.

The conveying device 11 is configured to advance the tube 4 (even when partially formed) along the tube conveying path Q, preferentially from the tube forming and sealing device 12 to and/or at least partially within the package forming apparatus 10.

The tube forming and sealing device 12 comprises at least two forming ring assemblies 17, preferentially arranged within the isolation chamber 14, even more preferentially arranged within the inner environment 15, configured to gradually fold in cooperation with one another the web 3 into the tube 4, preferentially by overlapping opposite longitudinal edges of the web 3 with one another. Thereby, in use, the seam portion 6 is formed.

Additionally, the tube forming and sealing device 12 comprises a sealing head 18, preferentially arranged within the isolation chamber 14, even more preferentially within the inner environment 15, and, configured to longitudinally seal the tube 4, preferentially along the longitudinal seam portion 6.

Preferentially, the filling device 13 comprises a filling pipe 19 configured to direct the pourable product into the tube 4. Preferentially, the filling pipe 19 is at least partially placed within the tube 4 for feeding, in use, the pourable product into the tube 4.

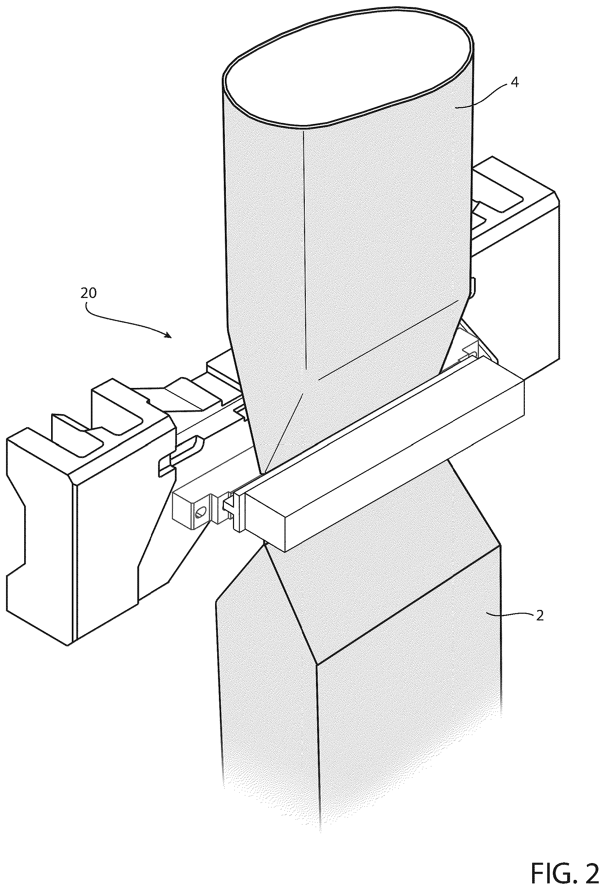

With particular reference to figure 2, the package forming apparatus 10 comprises a number of operative devices (not shown). Each operative device is configured to at least partially form the tube 4. The package forming apparatus 10 is configured to control each operative device such to at least partially form the tube 4 between two spaced transversal cross sections.

The packaging machine comprises a (transversal) sealing unit 20. The sealing unit 20 is configured to transversally seal a portion of the web 3 of packaging material. As exemplified in figure 2, the sealing unit 20 may be configured to transversally seal the tube 4 along a cross-section.

Preferably, the sealing unit 20 is configured to form respective first transversal sealing bands 5 and/or the respective second transversal sealing bands.

Additionally, the sealing unit 20 comprises at least one cutting element (not shown) configured to transversally cut the tube 4, preferentially between the first and second sealing bands 5.

The sealing unit 20 is configured for inductively heating (or welding) the web 3 of packaging material to obtain the transversal sealing bands 5.

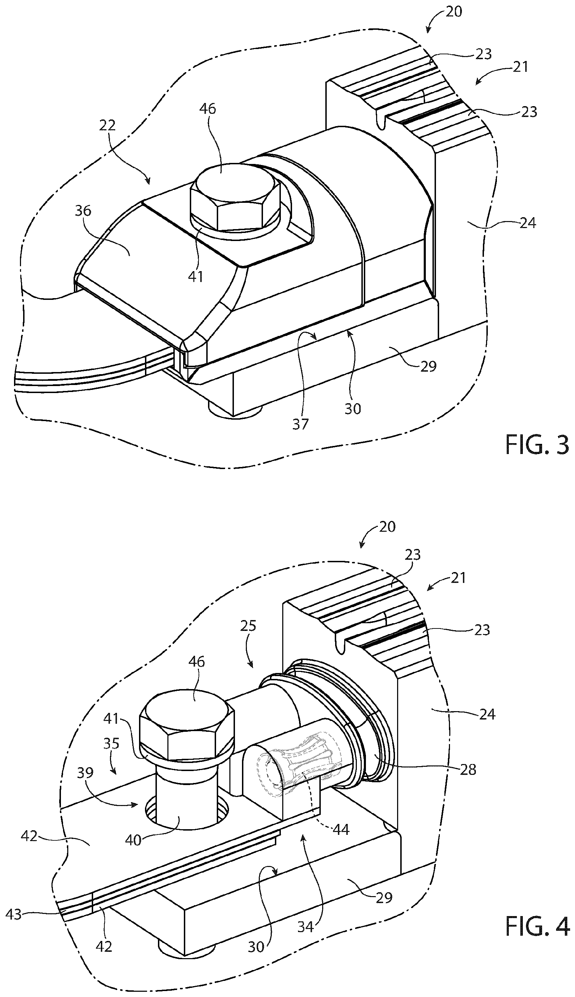

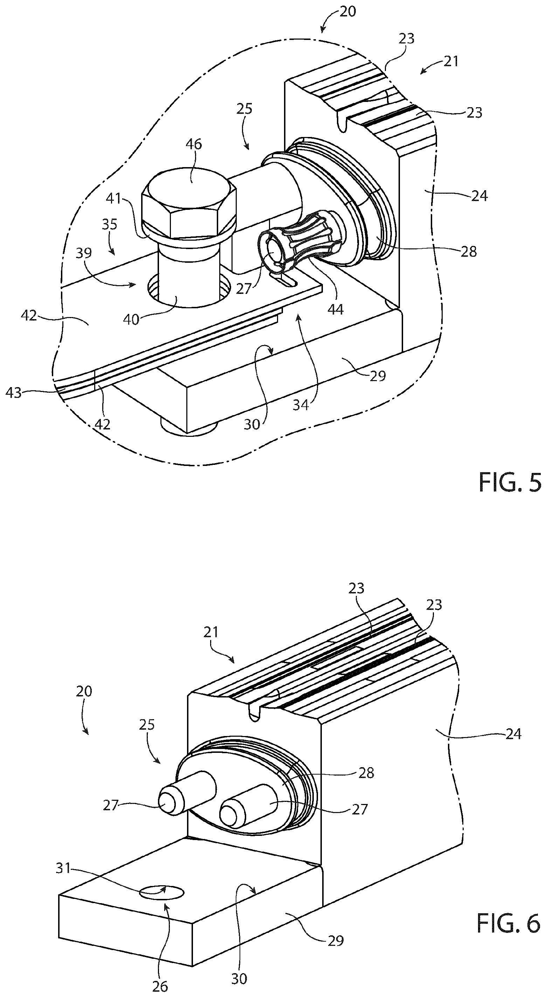

With particular reference to figures 3 to 5, there is described a an inductor device 21 and a connector device 22. The inductor device 21 may be configured for inducing a current in an electrically conductive layer of the web 3 of packaging material. The connector device 22 may be configured to provide power to the inductor device 21. In particular, the inductor device 21 is couplable to the connector device 22. In use, when positioned within the packaging machine 1 the inductor device 21 is coupled to the connector device 22.

The inductor device 21 is configured for heating (or welding) the web 3 made of multilayer packaging material by inducing the current in the electrically conductive layer.

More in detail, the inductor device 21 comprises a number of coils 23, i.e. at least one coil, configured to induce a current in the electrically conductive layer of the multilayer packaging material. Preferably, the inductor device 21 comprises a plurality of coils 23 configured to induce a current in the electrically conductive layer of the multilayer packaging material. Even more preferably, the inductor device 21 comprises a pair of coils 23 arranged substantially one next to the other, running substantially parallel one to the other and both configured to induce a current in the electrically conductive layer of the multilayer packaging material.

The inductor device 21 comprises a casing 24 for supporting and at least partially accommodating the coils 23. The casing 24 is made of an electrically insulating material, preferably is made of plastic.

The inductor device 21 further comprises a (first) electrical coupling element 25 configured for receiving electrical power from the connector device 22 and a (first) mechanical coupling element 26, which is mechanically connectable to the connector device 22. The mechanical coupling element 26 is configured for securing a mechanical connection to the connector device 22.

To provide a more robust connection between the inductor device 21 and the connector device 22, the electrical coupling element 25 is structurally distinct from the mechanical coupling element 26. In other words, the electrical coupling element 25 is physically separated and decoupled from the mechanical coupling element 26. The electrical coupling element 25 is operationally independent from the mechanical coupling element 26, i.e. the electrical coupling element 26 and the mechanical coupling element 25 both perform their role independently of each other.

Advantageously, a more robust solution is provided, facilitating a longer operational lifetime of the components. Also, the mechanical connection being separated from the electrical connection may lead to reducing possible electrical leakage.

The electrical coupling element 25 comprises a number of terminal ends 27. Each terminal end 27 may be connected to a respective coil in the number of coils 26. For the sake of simplicity, in the following, reference is made to a single terminal end 27, however the same principles apply to a plurality of terminal ends 27. As exemplified in the figures, a pair of terminal ends 27 are provided, each coupled to a respective coil from a pair of coils 26. In particular, the electrical coupling element 25 is defined by the terminal end 27 protruding from a terminal portion 28 of the casing 24. Advantageously, the terminal end 27 can be easily detached from the connector device 22 and, at the same time, provide a solid coupling to the connector device 22.

The inductor device 21 may comprise a connecting appendage 29 protruding from the casing 24; in particular, the connecting appendage 29 is arranged at (in the area of) one end of the casing 24. Preferably, the connecting appendage 29 is at the same end of the casing 24 as the terminal end 27. The connecting appendage 29 is provided with a substantially flat surface 30, facing the terminal end 27. When in use (i.e. when the inductor device 21 is connected to the connector device 22), the flat surface 30 is configured for contacting (and preferably at least partially supporting) the connector device 22.

The first mechanical coupling element 26 may comprise a (first) through hole 31. The first through hole 31 may define the mechanical coupling element 26. In particular, the through hole 31 may be positioned at the connecting appendage 29. The through hole 31 is a plain bore. Advantageously, the absence of a thread within the through hole may reduce pressure on the mechanical coupling element 26. The through hole 31 is provided with an internal smooth, not threaded surface. The through hole 31 is a cylindrical opening that passes through the connecting appendage 29 without any modifications such as threading or keyways; in other words, the through hole 31 is free from threads. The through hole 31 is configured for establishing a mechanical connection to the connector device 22 and to a base body 32 as better described in the following.

The inductor device 21 may comprise a gasket element 33, in particular an o-ring. The gasket element 33 surrounds the terminal portion 28. The gasket element 33 is interposable between the electrical coupling element 25 and the connector device 22. In particular, when in use (i.e. when the inductor device 21 is connected to the connector device 22) the gasket element 33 is interposed between the electrical coupling element 25 and a (second) electrical coupling element 34 as better described in the following. The gasket element 33 is configured for insulating and protecting the electrical coupling element 25 from the external environment.

The connector device 22 is configured for cooperating with the inductor device 21 for heating (or welding) the web 3 of packaging material. In particular, the connector device 22 is configured for electrically connecting the coils 23 to a power source (not shown).

The connector device 22 comprises a (second) electrical coupling element 34 configured for transmitting electrical power to the inductor device 21 (in particular, to the coils 23 by means of the electrical coupling element 25) and a (second) mechanical coupling element 35, which is mechanically connectable to the inductor device 21. The mechanical coupling element 35 is configured for securing a mechanical connection to the inductor device 21. In particular, the first electrical coupling element 25 is configured to couple to the second electrical coupling element 34. The first mechanical coupling element 26 is configured to couple to the second mechanical coupling element 35.

To provide a more robust connection between the inductor device 21 and the connector device 22, the electrical coupling element 34 is structurally distinct from the mechanical coupling element 35. In other words, the electrical coupling element 34 is physically separated and decoupled from the mechanical coupling element 35. The electrical coupling element 35 is operationally independent from the mechanical coupling element 34; i.e., the electrical coupling element 34 and the mechanical coupling element 35 both perform their role independently of each other. Advantageously, a more robust solution is provided, facilitating a longer operational lifetime of the components. Also, the mechanical connection (i.e. the mechanical coupling element 34) being separated from the electrical connection (i.e. electrical coupling element 34) may lead to reducing possible electrical leakage.

The connector device 22 comprises a casing 36 configured for at least partially housing the electrical coupling element 34. The casing 36 is configured for at least partially housing the mechanical coupling element 35. The casing 36 is made of an electrically insulating material, preferably is made of plastic. The casing 36 is provided with a substantially flat surface 37 facing, in use, the connecting appendage 29. When in use, the surface 37 is arranged on the surface 30.

The second mechanical coupling element 35 may comprise a (second) through hole 38. The second through hole may be positioned at the casing 36. The through hole 38 is a plain bore realized to reduce a stress or pressure on the mechanical coupling element 35. The through hole 38 is provided with an internal smooth, not threaded surface. The through hole 38 is a cylindrical opening that passes through the casing 36 without any modifications such as threading or keyways; in other words, the through hole 38 is free from threads. The through hole 38 is configured for establishing a mechanical connection with the inductor device 21 as better described in the following. When in use (i.e. when the inductor device 21 is connected to the connector device 22), the through hole 38 is arranged facing the through hole 31. Advantageously, the through hole 38 and the through hole 31 being realized as plain bores may enable an adjustment of the relative position of the inductor device 21 with respect to the connector device 22, e.g. even in use.

The connector device 22 comprises a non-deformable cylinder 39, preferably having a tubular shape of reduced thickness. The cylinder 39 surrounds the through hole 38. In other words, the cylinder 39 is provided with an internal surface defining the through hole 38. The cylinder 39 may be provided for structural stiffness. The cylinder is realized in a metallic material, preferably in stainless steel. The cylinder 38 is provided with a first end, e.g. facing the inductor device 21 and, in particular, the connecting appendage 29, and a second end, opposite to the first end. When in use (i.e. when the inductor device 21 is connected to the connector device 22), the first end is arranged in contact on the surface 30.

Preferably, the cylinder 39 comprises a main body portion 40 and a collar 41. The collar 41 has a first end and a second end, opposite to the first end. The collar 41 is connected to the main body portion 40 at the first end. The internal surface of the main body portion 40 and the first end of the collar 41 have a first diameter; the internal surface of the second end of the collar 41 has a second diameter, greater than the first diameter. Adavantageously, the collar 41 has at least partially a tapered shape; the diameter of the internal surface of the collar 41 is not constant. The diameter of the collar 41 is designed to vary from the first diameter at the first end to the second diameter at the second end; in particular the diameter of the collar 41 increases between the first end and the second end. The collar 41 is advantageously arranged facing the connecting appendage 29 or away from the connecting appendage 29.

The electrical coupling element 34 comprises a number of electrical connecting plates 42. Preferably, the electrical coupling element 34 comprises a plurality of electrical connecting plates 42 configured for supplying electrical power from a power source (not shown) to the electrical coupling element 25. Even more preferably, the electrical coupling element 34 comprises a pair of electrical connecting plates 42, each of which is configured for supplying electrical power from a power source to a respective coil 23. An insulator layer 43 is interposed between the pair of electrical connecting plates 42. The electrical connecting plates 42 are arranged substantially superimposed one above the other. The electrical connecting plates 42 are preferably realized in copper. Each electrical connecting plate 42 surrounds the mechanical coupling element 35, i.e. the through hole 38.

The electrical coupling element 34 is configured for surrounding the electrical coupling element 25.

According to a first embodiment, the (second) electrical coupling element 34 is configured to directly contact the (first) electrical coupling element 25. The casing 36 is provided with at least one seat, e.g. having a substantially cylindrical symmetry along an axis X. The electrical coupling element 34 (in particular, the terminal ends of the electrical connecting plates 42) is arranged within said seat and surrounds the first electrical coupling element 25. For example, each seat may surround a respective terminal end 27. The electrical coupling element 25 is movable along the axis X to engage the electrical coupling element 34. The first electrical coupling element 25, in particular the terminal end 27, extends along the axis X.

According to a second embodiment, the (second) electrical coupling element 34 is configured to indirectly contact the (first) electrical coupling element 25. The electrical coupling element 34 is configured to contact the electrical coupling element 25 with the interposition of an elastic element 44.

Advantageously, the elastic element 44 comprises a spring 44 configured for surrounding the first electrical coupling element 25, e.g. having a substantially cylindrical symmetry along the axis X. The elastic element 44 is housed within the seat of the casing 36.

The elastic element 44 is realized in an electrically conductive material; preferably, the elastic element 44 comprises beryllium and/or gold. Advantageously, this combination of materials may provide one or more advantages, such as good deformation properties and/or good conductive properties and is difficult to corrode. Advantageously, the elastic element 44 is realized in beryllium with a gold coating.

The elastic element 44 surrounds the (first) electrical coupling element 25, in particular the terminal ends 27. The electrical coupling element 25 is movable along the axis X to engage the elastic element 44. The elastic element 44 is configured for deforming, in particular for expanding, when the electrical coupling element 25 is inserted thereinto. More in detail, the elastic element 44 is configured for radially deforming, in particular for radially expanding, when the electrical coupling element 25 is inserted thereinto. Advantageously, the elastic element 44 is detachable (i.e. easily replaceable) from both the electrical coupling element 25 and the electrical coupling element 34.

When in use (i.e. when the inductor device 21 is connected to the connector device 22) the electrical coupling element 25 is relatively movable with respect to the electrical coupling element 34. In particular, the electrical coupling element 25 is relatively movable with respect to the electrical coupling element 34 along the axis X. More in detail, the electrical coupling element 25 is slidable along the axis X.

The sealing unit 20 comprises the base body 32 to support the inductor device 21 and the connector device 22. The base body 32 is provided with a (third) hole 45. Preferably the hole 45 is not through. Advantageously, the hole 45 is threaded. When in use (i.e. when the inductor device 21 is connected to the connector device 22), the hole 45 is arranged coaxial with the through hole 31 and through hole 38.

Finally, the sealing unit 20 comprises a screw element 46. When in use (i.e. when the inductor device 21 is connected to the connector device 22), the screw element 46 is configured for engaging the through hole 31 and the through hole 38 to mechanically connect the inductor device 21 and the connector device 22. The screw element 46 is also configured to engage the third hole 45 to mechanically connect the inductor device 21 and the connector device 22 to the base body 32.

The sealing unit 20 is described with reference to the package 10 forming apparatus and is described for inductively heating the tube 4 to obtain the transversal sealing bands 5. Anyway, the sealing unit 20 described above could be advantageously applied as sealing head 18 in the tube forming and sealing device 12 to longitudinally seal the tube 4, preferentially along the longitudinal seam portion 6.

The sealing unit 20 described above could be advantageously applied in a strip application apparatus (not shown) configured for applying a heat-sealing strip onto the web 3 of packaging material.

### LIST OF REFERENCE NUMERALS

- 1: packaging machine
- 2: packages
- 3: web of packaging material
- 4: tube
- 5: sealing band
- 6: longitudinal seam portion
- 10: package forming apparatus
- 11: conveying device
- 12: tube forming and sealing device
- 13: filling device
- 14: isolation chamber
- 15: inner environment
- 16: outer environment
- 17: forming ring assembly
- 18: sealing head
- 19: filling pipe
- 20: sealing unit
- 21: inductor device
- 22: connector device
- 23: coil
- 24: casing
- 25: (first) electrical coupling element
- 26: (first) mechanical coupling element
- 27: terminal end
- 28: terminal portion
- 29: appendage
- 30: surface
- 31: (first) through hole
- 32: base body
- 33: gasket element
- 34: (second) electrical coupling element
- 35: (second) mechanical coupling element
- 36: casing
- 37: surface
- 38: (second) through hole
- 39: cylinder
- 40: main body portion
- 41: collar
- 42: plate
- 43: insulator layer
- 44: elastic element
- 45: (third) hole
- 46: screw element
- A: axis
- P: web conveying path
- Q: tube conveying path
- X: axis

## Claims

1. An inductor device (21) for inducing a current in a web (3) of packaging material comprising an electrically conductive layer, the inductor device (21) comprising:
- a number of coils (23) configured to induce a current in the electrically conductive layer;
- a first electrical coupling element (25) configured for receiving electrical power from a connector device (22); and
- a first mechanical coupling element (26) mechanically connectable to the connector device (22);
wherein the first electrical coupling element (25) is structurally distinct from the first mechanical coupling element (26).

2. An inductor device according to claim 1 and comprising a gasket element (33), in particular an o-ring, interposable between the first electrical coupling element (25) and the connector device (22).

3. An inductor device according to claim 1 or 2, wherein the first mechanical coupling element (26) comprises a first through hole (31), preferably wherein the first through hole (31) is a plain bore.

4. An inductor device according to anyone of the previous claims, wherein the first electrical coupling element (25) is defined by a terminal end (27) of said number of coils (23).

5. A connector device (22) for connecting to an inductor device (21) configured for inducing a current in a web of packaging material comprising an electrically conductive layer; the connector device (22) comprises a second electrical coupling element (34) configured for transmitting electrical power to the inductor device (21) and a second mechanical coupling element (35) configured for mechanically connecting with the inductor device (21); wherein the second electrical coupling element (34) is structurally distinct from the second mechanical coupling element (35).

6. A connector device according to the previous claim, wherein the second mechanical coupling element (35) comprises a second-through hole (38), preferably wherein the second through hole (38) is a plain bore.

7. A connector device according to the previous claim and comprising a non-deformable cylinder (39) surrounding the second through hole (38), preferably realized in a metallic material, even more preferably realized in stainless steel.

8. A connector device according to the previous claim, wherein the cylinder (39) comprises a collar (41) at an end, preferably the collar (41) having a tapered shape.

9. A connector device according to anyone of claims 5 to 8, wherein the second electrical coupling element (34) is configured for surrounding a first electrical coupling element (25) of the inductor device (21).

10. A connector device according to the previous claim, wherein the second electrical coupling element (34) is configured to contact said first electrical coupling element (25) or wherein the connector device (22) comprises an elastic element (44) interposable between the second electrical coupling element (34) and said first electrical coupling element (25).

11. A connector device according to the previous claim, wherein the elastic element (44) is configured for deforming when the first electrical coupling element (25) is inserted thereinto.

12. A connector device according to claim 10 or 11, wherein, in use, the second electrical coupling element (34) is relatively movable with respect to the first electrical coupling element (25).

13. A connector device according to any of claims 10 to 12, wherein the elastic element (44) is electrically conductive, preferably comprising Beryllium and/or Gold.

14. A connector device according to any of claims 10 to 13, wherein the elastic element (44) is detachable from the second electrical coupling element (34).

15. A connector device according to any of claims 5 to 13 and comprising an insulator case (36), preferably made of plastic, configured for housing said second electrical coupling element (34) and/or said second mechanical coupling element (35).

16. A sealing unit (20) configured for a packaging machine (1) configured to produce packages (2) from a web (3) of packaging material, the sealing unit (20) comprising:
- an inductor device (21) according to any of claims 1 to 4;
- a connector device (22) according to any of claims 5 to 15.

17. A sealing unit according to claim 3, claim 6 and claim 16, further comprising a screw element (46) configured to engage the first through hole (31) and the second through hole (38) to mechanically connect the inductor device (21) and the connector device (22).

18. A sealing unit according to claim 17 and comprising a base body (32) to support the inductor device (21) and the connector device (22) and provided with a third hole (45) configured to be engaged, in use, by the screw element (46), preferably wherein the third hole (45) is threaded.

19. A packaging machine (1) for producing sealed packages (2) from a web (3) of packaging material comprising at least one sealing unit (20) according to anyone of claims 16-18.
